# EUROPEAN PATENT APPLICATION

(11) **EP 1 462 758 A2**
(43) Date of publication of application: **29.09.2004**
(21) Application number: 04251809.2
(22) Date of filing: 26.03.2004
(51) Int. Cl.: G01B 5/00

(54) **Method and device for attaching an elastic fixture to a length measuring device.**

(30) Priority: 28.03.2003 JP 2003091855
(71) Applicant: Mitutoyo Corporation, Kawasaki-shi, Kanagawa-ken 213-0012 (JP)
(72) Inventor: Mori, Hiroatsu c/o Mitutoyo Corporation, Kawasaki-shi Kanagawa 213-0012 (JP); Kawada, Hiroaki c/o Mitutoyo Corporation, Kawasaki-shi Kanagawa 213-0012 (JP); Sakagami, Seiji c/o Mitutoyo Corporation, Kawasaki-shi Kanagawa 213-0012 (JP)
(74) Representative: Skone James, Robert Edmund

(57) **Abstract**

In the case of attaching a linear scale 10 to an object (8) to be measured, a elastic fixing block 50 is used, the elastic fixing block 50 being fixed to the linear scale at one end (56) and to the object (8) to be measured at the other end (52), the elastic fixing block 50 including a parallel plate spring mechanism 54 capable of being elastically deformed in a longitudinal direction of the linear scale.

## Description

The present invention relates to an elastic fixture and a fixing method for attaching a length measuring device to an object to be measured. More particularly, the present invention relates to an elastic fixture of a length measuring device and a fixing method of fixing the length measuring device with the elastic fixture, which can accept a larger deformation caused by a difference of the linear expansion coefficients between the length measuring device and the object to be measured, ensure the rigidity in directions except for a longitudinal direction of the length measuring device, and fix the length measuring device to the object to be measured at multiple points exceeding three points. For example, the present invention relates to an elastic fixture which is suitably used for a unit-type linear scale, the unit-type linear scale being mainly fixed to a stage-sliding portion of a machine body made of iron under the condition that a main scale made of glass is housed in a frame made of aluminum.

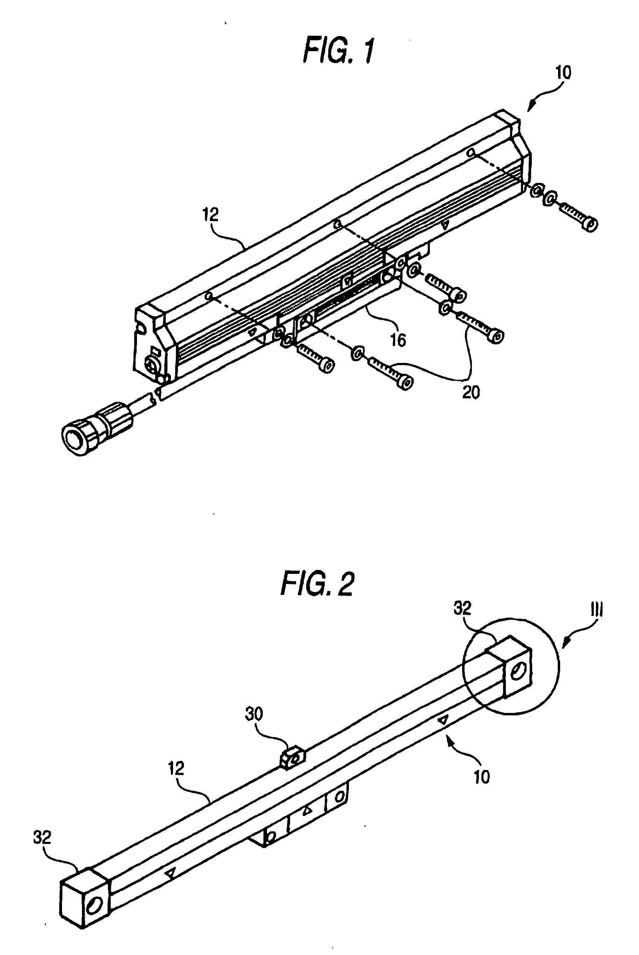

As a linear scale for controlling a relatively large-scale machine tool or industrial machine in which the generation of vibration and shock is estimated, a unit-type linear scale of multiple point fixing type (referred to as a linear scale hereinafter), which is exemplarily shown in Fig. 1, is well known.

In general, a linear scale 10 comprises a main scale made of glass, and a frame 12 made of aluminum housing the glass main scale. The linear scale 10 is fixed to a stage-sliding portion (not shown in the drawing) of a machine body, for example, by screws 20 under the condition that the glass main scale is housed in the aluminum frame 12. In Fig. 1, a reference numeral 16 is a detection head in which a detection portion such as an index scale, which can be relatively moved with respect to the frame 12, is accommodated.

Accordingly, when the ambient temperature changes, the thermal stress is generated between the aluminum frame 12 of the linear scale 10 and the machine body mainly made of iron by a difference of the linear expansion coefficients between them. Due to the thermal stress, the bend and deformation of the frame 12 and the glass scale housed in the frame occur, and further a relative displacement of the frame 12 with respect to the machine body is generated, which causes the deterioration of accuracy. Accordingly, it is necessary to provide a mechanism for reducing the thermal stress. The mechanism also must resist an external force given when the vibration or shock is caused. Further, the mechanism must be applied to a relatively long scale.

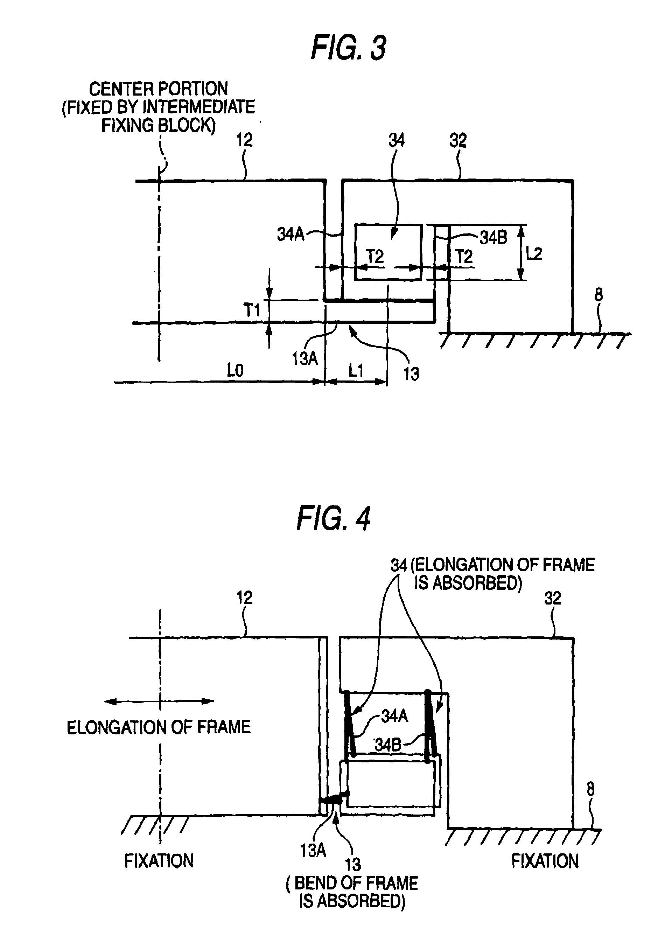

An example of the fixing mechanism of fixing the frame 12 for reducing the thermal stress, which was proposed in JP-A-2003-97936 by the applicant, is shown in Fig. 2 (which is a perspective view), Fig. 3 (which is an enlarged front view of portion III of Fig. 2), and Fig. 4 (which is a schematic view showing a state of operation).

In this example, in order to maintain a relative positional relationship between the frame 12 and a mating surface 8 of the machine body, an intermediate fixing block 30 for completely fixing an intermediate portion is arranged at one point in a central portion of the frame 12. At both end portions of the frame 12, end fixing blocks 32 each having a parallel plate spring mechanism 34 for reducing the thermal stress are arranged via a plate spring mechanism 13. In this case, even if the frame 12 is extended when the ambient temperature changes, as shown in Fig. 4, the thermal stress can be reduced by the deformation of a plate spring 13A of the plate spring mechanism 13 and plate springs 34A, 34B of the parallel plate spring mechanism 34. Since the central portion is completely fixed by the intermediate fixing block 30, a relative displacement is not generated with respect to the mating surface 8.

In order to solve the same problems as those of the present invention, JP-A-2-26725 discloses a structure for fixing the end portion of the frame via a slit, the profile of which is zigzag. Japanese Patent No. 2989140 discloses a structure for fixing the end portion of the frame via a mounting spur, the profile of which is special. JP-A-2001-50776 discloses a structure for fixing the end portion of the frame with a spring.

However, when the mechanisms shown in Figs. 2 to 4 are applied to a relatively long scale, the following problems may be encountered, which will be explained referring to Fig. 3.
(1) The longer an overall length L0 of the frame is, the larger the deformation of the parallel plate spring mechanism 34, which is caused by a change in the ambient temperature, becomes. In order to cope with this situation, wall thickness T1 and T2 of the plate springs 13A, 34A, 34B must be decreased and length L1, L2 must be increased. However, in this case, the lack of rigidity of the fixing portion is caused in directions except for a longitudinal direction of the fixing portion, and further the dimensions are limited by the restriction imposed on the dimensions of the cross section. Therefore, the overall length of the frame L0 is restricted to about 1 m to solve all the problems such as a reduction of the thermal stress and a maintenance of the mechanical strength when an external force is given. The above restriction is imposed upon the scale in which the zigzag structure is used as described in JP-A-2-26725. The above restriction is also imposed upon the scale in which the mounting spur structure is used as described in Japanese Patent No. 2989140.
(2) In the structure shown in Fig. 2, the frame 12 is fixed at three points irrespective of the length of the frame 12. Accordingly, the longer the overall length of the frame 12 is, the lower the natural frequency of the frame 12 is and the larger the amplitude when an external force is given to the frame 12 is. Therefore, when this frame 12 is put into practical use, the problem of lack of rigidity is caused.

The present invention has been accomplished to solve the above conventional problems. It is an object of the present invention to provide an elastic fixture and a fixing method of the elastic fixture, which can accept a larger deformation of a parallel plate spring mechanism, maintain the rigidity even in directions except for a longitudinal direction thereof, and fix a frame to an object to be measured at multiple points exceeding three points.

In order to solve the above problems, the present invention provides an elastic fixture for attaching a length measuring device to an object to be measured, comprising:
a fixing portion being fixed to an object to be measured;
a connecting portion being fixed to the length measuring device; and
a parallel plate spring mechanism being capable of being elastically deformed in a longitudinal direction of the length measuring device,
wherein the elastic fixture is disposed between a back face of the length measuring device and the object to be measured.

In the elastic fixture, the parallel plate spring mechanism may be disposed between the fixing portion and the connecting portion, and the elastic fixture may be fixed to the length measuring device at one end and to the object to be measured at the other end.

Further, in the elastic fixture, a plate spring of the parallel plate spring mechanism may be formed into a U-shape, and fixed to the length measuring device and the object to be measured on the same side.

The present invention provides a fixing method of fixing a length measuring device comprising using the elastic fixture described above.

The present invention provides a fixing method of fixing a length measuring device comprising: using the elastic fixture described above, and using a complete fixture not including a parallel plate spring mechanism.

An elastic body such as an elastic adhesive agent or a plate spring is arranged between the length measuring device and the elastic fixture so as to make up for lack of the mechanical strength in directions except for the longitudinal direction.

### Brief Description of the Drawings

Fig. 1 is an exploded perspective view showing an example of the structure of the conventional unit-type linear scale of multiple (three points) fixing type;
Fig. 2 is a perspective view showing an example of a frame fixing mechanism in the comparative example shown in JP-A-2003-97936;
Fig. 3 is an enlarged front view of portion III in Fig. 2;
Fig. 4 is a schematicl view showing a state of operation of the comparative example shown in Figs. 2 and 3;
Fig. 5 is an exploded perspective view showing the structure of a first embodiment of the present invention;
Fig. 6 is a laterally sectional view showing a state in which an elastic fixing block used for the first embodiment is attached to a linear scale;
Fig. 7 is a front view showing a shape of the elastic fixing block used for a second embodiment of the present invention;
Fig. 8 is a laterally sectional view showing a state in which the elastic fixing block used for the second embodiment of the present invention is attached to a linear scale;
Fig. 9 is a laterally sectional view showing a shape of an elastic fixing block used for a third embodiment of the present invention;
Fig. 10 is a laterally sectional view showing a shape of an elastic fixing block used for a fourth embodiment of the present invention;
Fig. 11 is a front view showing a shape of a plate spring used for the fourth embodiment; and
Fig. 12 is a laterally sectional view showing a shape of an elastic fixing block used for a fifth embodiment of the present invention.

Referring to the drawings, an embodiment of the present invention will be explained below in detail.

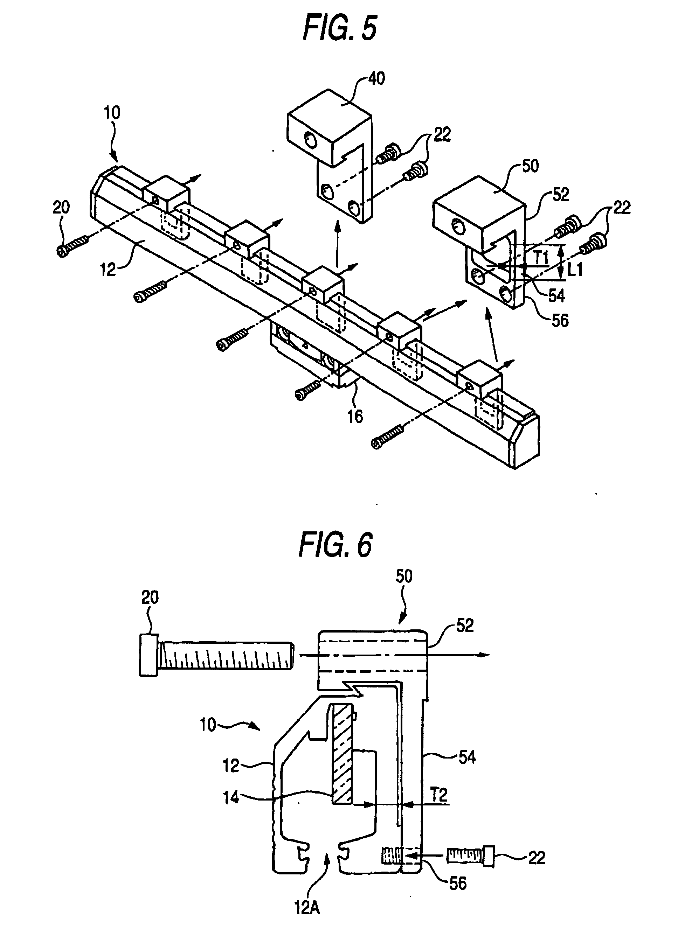

In the first embodiment of the present invention, as shown in Fig. 5 and Fig. 6, a complete fixing block 40 not including a parallel plate spring is arranged at one portion, which is a center or a portion except for the center, in a longitudinal direction of a frame 12 made of aluminum in which a main scale 14 made of glass is housed. An elastic fixing block 50 is arranged at a portion of the frame 12 except for the above portion. The elastic fixing block 50 comprises a parallel plate spring mechanism 54 for reducing the thermal stress, a fixing portion 52 for fixing to a mating surface with screws 20, and a connecting portion 56 for fixing to the frame 12 of the linear scale 10 with screws 22, which are integrated into one body. The elastic fixing block 50 is disposed between a back face of the frame 12 and the mating surface so that the frame 12 is attached to the mating surface.

Due to the above structure, when the ambient temperature is changed, the behavior of elongation is generated with a complete fixing portion of the complete fixing block 40 as the reference, and the thermal stress is reduced by a function of the parallel plate spring 54 of the elastic fixing block 50. Therefore, the bend and deformation of the frame 12 and a relative displacement with respect to the mating surface are not caused.

As the detail are shown in Fig. 6, the fixing blocks 40, 50 are arranged on the back face of the frame 12 and fixed to the frame 12 in a portion close to an opening portion 12A of the frame 12. Due to the foregoing, length L1 of the plate spring shown in Fig. 5 is can be relatively extended long. Therefore, this structure can be applied to a long scale while a sufficiently high rigidity is being maintained in directions except for the longitudinal direction. For example, in the case of L1 = 30 mm, when the thickness of the plate spring is 3 mm, that is, T1 = 3 mm, it is possible to apply this structure to the frame, the overall length of which is 3 m. Even in the case of a frame, the overall length of which is 6 m, it is possible to apply this structure when T1 is changed to 2.3 mm, and it is unnecessary to change dimensions of the cross section.

Since the fixing blocks 40, 50 are respectively composed of independent parts, it is possible to arrange the fixing blocks at an arbitrary pitch and number in the longitudinal direction. Accordingly, the natural frequency of the frame 12 can be arbitrarily set, for example, it is possible to cope with a special situation in which the natural frequency of the frame 12 is set while the natural frequency of the mating machine body is avoided or the designated natural frequency is avoided.

On the other hand, when the same countermeasures are taken for the linear scale in which the zigzag structure described in JP-A-2-26725 or the mounting spur described in Japanese Patent No. 2989140 is used, in order to increase size L1, dimensions of the cross section are increased. On the contrary, when dimensions of the cross section are maintained, size T1 is decreased and it becomes impossible to maintain the fixing strength.

In this connection, in the case shown in Fig. 5, the frame is fixed at five points, however, the frame may be fixed at three points in the same manner as that of the prior art.

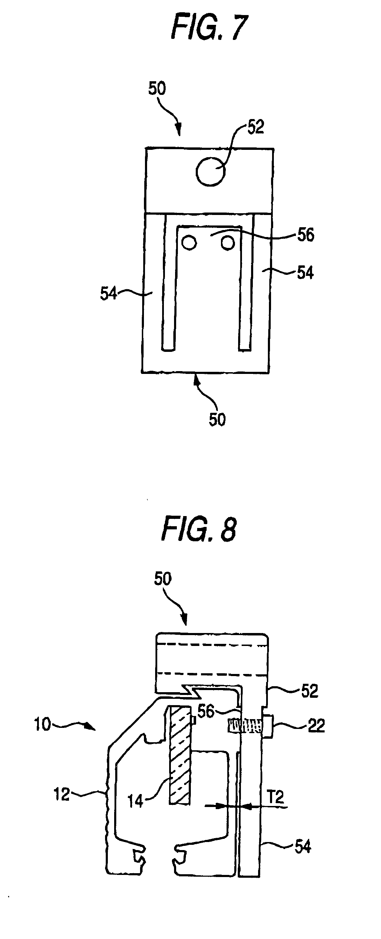

Fig. 7 and Fig. 8 respectively show a shape of the elastic fixing block 50 and an example of the arrangement of the connecting portion 56 to the frame 12. In the first embodiment shown in Fig. 6, in order to maintain the fixing strength, thickness T2 of the frame 12 body is increased, however, in the second embodiment, the plate spring of the parallel plate spring mechanism 54 is formed into a U-shape as shown in Fig. 7 so that it can be fixed to the frame 12 and the object to be measured on the same side (on the upper side of the drawing). In the second embodiment, the fixing strength is less affected by size T2 and thus, T2 can be decreased. Therefore, while the other characteristics are maintained to be the same as those of the first embodiment shown in Fig. 6, the dimensions of the cross section can be decreased and the weight of the entire device can be reduced.

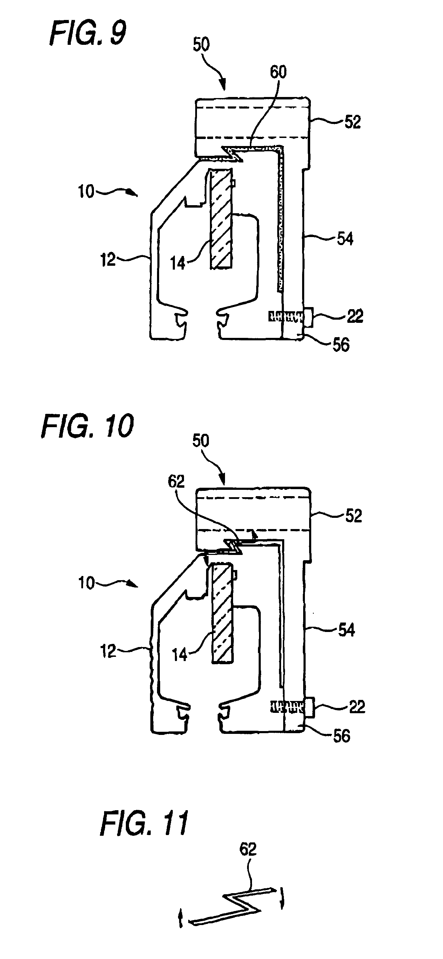

Next, a third embodiment of the present invention is shown in Fig. 9, and a fourth embodiment of the present invention is shown in Fig. 10.

In the third embodiment, a thick elastic body 60 made of a silicon adhesive agent is arranged between the elastic fixing block 50 and the frame 12. In the fourth embodiment, a Z-shaped plate spring 62 shown in Fig. 11 is arranged between the elastic fixing block 50 and the frame 12.

In the case where the overall length of the frame 12 is extended, for example, in the case where the overall length of the frame 12 is 10 m, it is necessary to further decrease wall thickness T1 of the plate spring. However, according to the third and the fourth embodiments, it is possible to make up for lack of the mechanical strength in directions except for the longitudinal direction without changing the profile of the cross section.

In the third and forth embodiments, the elastic body or the plate spring is applied to the elastic fixing block of the first embodiment. However, the elastic body or the plate spring may be applied to the elastic fixing block of the second embodiment and in this case, it is also possible to make up for lack of strength in directions except for the longitudinal direction.

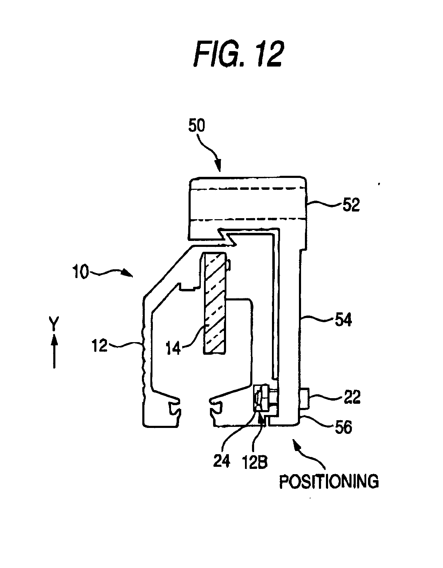

Fig. 12 is a view showing a fifth embodiment of the shape of the elastic fixing block 50 and the connecting portion 56 for the frame 12.

In this embodiment, the shape of the lower portion of the frame 12 is changed, a nut 24 is housed in a groove 12B which extends in the longitudinal direction, and the flame 12 and the elastic fixing block 50 are positioned while a lower end position of the fixing block 50 and a lower end position of the frame 12 are aligned.

According to this embodiment, the tapping of the frame 12 becomes unnecessary, and the positioning in the vertical direction (direction Y) in the case of assembling becomes unnecessary. Therefore, expenses of working and assembling can be reduced. In this connection, since the frame is made by means of extrusion, the groove 12B can be easily formed.

Although the fifth embodiment uses both of the long groove 12B shape and the positioning structure of the connecting portion 56 for the frame 12, any one of them may be applied. In this case, the tapping of the frame 12 becomes unnecessary, or the positioning becomes unnecessary and thus expense of assembling can be reduced. Further, the long groove shape and/or the positioning structure in the fifth embodiment may be used for the elastic fixing block of the first to fourth embodiments so that the above-mentioned effects can be obtained.

When extruded material is used for the complete fixing block 40 and the elastic fixing block 50, the above effect can be also provided.

In this connection, in the first to fifth embodiments, the main scale 14 is made of glass, the frame 12 is made of aluminum and the mating surface machine (8) is made of iron. However, it should be noted that the combination of the materials is not limited to the above specific embodiment.

According to the present invention, it is possible to accept a larger deformation of the parallel plate spring mechanism. Further, it is possible to maintain the rigidity in directions except for the longitudinal direction. Furthermore, it is possible to cope with the fixation at multiple points exceeding three points.

## Claims

1. An elastic fixture for attaching a length measuring device to an object to be measured, comprising:
a fixing portion being fixed to an object to be measured;
a connecting portion being fixed to the length measuring device; and
a parallel plate spring mechanism being capable of being elastically deformed in a longitudinal direction of the length measuring device,
wherein said elastic fixture is disposed between a back face of the length measuring device and the object to be measured.

2. The elastic fixture according to claim 1, wherein the parallel plate spring mechanism is disposed between the fixing portion and the connecting portion, and said elastic fixture is fixed to the length measuring device at one end and to the object to be measured at the other end.

3. The fixture according to claim 1 or claim 2, wherein a plate spring of the parallel plate spring mechanism is formed into a U-shape, and fixed to the length measuring device and the object to be measured on the same side.

4. A fixing method of fixing a length measuring device comprising;
using the elastic fixture described in claim 1, 2 or 3.

5. A fixing method of fixing a length measuring device comprising:
using the elastic fixture described in claim 1, 2 or 3; and
using a complete fixture not including a parallel plate spring mechanism.

6. A fixing method of fixing a length measuring device according to claim 4 or 5, further comprising:
arranging an elastic body between the length measuring device and the elastic fixture.

7. A fixing method of fixing a length measuring device according to claim 6, wherein the elastic body is an elastic adhesive agent or a plate spring.
